# EUROPÄISCHE PATENTSCHRIFT

(11) **EP 4 051 911 B1**
(45) Veröffentlichungstag und Bekanntmachung des Hinweises auf die Patenterteilung: **01.10.2025**
(21) Anmeldenummer: 20793664.2
(22) Anmeldetag: 20.10.2020
(51) Int. Cl.: F15B 20/00, F15B 15/06, F16K 31/163

(54) **ELEKTROHYDRAULISCHES SYSTEM FÜR EIN VENTIL**
ELECTROHYDRAULIC SYSTEM FOR A VALVE
SYSTÈME ÉLECTROHYDRAULIQUE D'UNE SOUPAPE

(30) Priorität: 31.10.2019 DE 102019216878
(43) Veröffentlichungstag der Anmeldung: 07.09.2022
(73) Patentinhaber: Robert Bosch GmbH, 70442 Stuttgart (DE)
(72) Erfinder: ORTH, Alexandre, 97265 Hettstadt (DE); HENDRIX, Gottfried, 97737 Gemuenden (DE); JENSEN, Tor, 1432 Ski (NO)
(86) Internationale Anmeldenummer: PCT/EP2020/079439
(87) Internationale Veröffentlichungsnummer: WO 2021/083724

(56) Entgegenhaltungen:
- US-A- 4 520 994
- US-A1- 2003 024 239
- US-A1- 2010 187 454
- US-A1- 2011 155 937

## Beschreibung

### TECHNISCHER BEREICH

Die vorliegende Erfindung betrifft das technische Gebiet der elektrohydraulischen Systeme für ein Ventil, die zum drehenden Antreiben eines Ventils konfiguriert sind, und die konfiguriert sind, im Störfall ein Ventil in eine vorgegebene Drehposition zu drehen und diese Position abzusichern. Insbesondere betrifft die vorliegende Erfindung eine elektrohydraulische Anordnung, die das elektrohydraulische System und ein Gehäuse, in dem das elektrohydraulische System gelagert ist, umfasst.

### STAND DER TECHNIK

Heutzutage sind verschiedene Varianten bekannt, die ermöglichen, ein Rotationsventil im Störfall in eine vorgegebene Drehposition zu drehen und diese Position abzusichern. Insbesondere solche Varianten ermöglichen, bei einem Störfall, das Ventil zu steuern, um eine Position, bei der das Ventil geschlossen ist, einzustellen und gleichzeitig diese abzusichern, damit abgesichert werden kann, dass das Ventil geschlossen bleibt.

Normalerweise sind bei solchen Systemen die Verstell Antriebe so gekoppelt, dass bei Ventilverstellung gleichzeitig die Rückstelleinrichtung gleichermaßen bewegt wird. Das hat die Folge, das zur Ventilverstellung immer auch die Kraft für die Rückstellung aufgebracht werden muss, was einen erheblich höheren Energieaufwand bedeutet als nur das Ventil zu betätigen. Weiterhin ist es bei herkömmlichen Systemen nicht möglich die Ventilbewegung unabhängig von der Rückstelleinrichtung zu betreiben, so dass die Betätigungsleistung zeitlich getrennt aufgebracht werden kann und nicht bei jeder Ventilbetätigung die Vorspann Vorrichtung betätigt werden muss da diese bereits vorgespannt ist.

Aus der US 2003 024239 A1 ist ein Aktuator bekannt, der über einen in zwei Richtungen betätigbaren Kolben eine Welle betätigen kann.

Ziel der vorliegenden Erfindung ist deswegen ein elektrohydraulisches System für ein Ventil bereitzustellen, das kompakt, Energieeffizient ist, sowie Ventilbetätigung und Vorspannung der Sicherheitsvorrichtung in getrennten Schritten vorgenommen werden kann.

Aus diesem Grund bietet diese Erfindung ein System und ein Verfahren zum Realisieren eines kompakten Drehantriebs, der in der Lage ist, einen ausfallsicheren Notverschluss im Falle eines Ausfalls der elektrischen Energieversorgung bereitzustellen.

### KURZFASSUNG

Die vorliegende Erfindung basiert auf der Idee, ein hydraulisches System zu erzeugen, in dem die Vorspanneinrichtung von dem hydraulischen Kolben, der für das Drehen der Abtriebswelle zuständig ist, entkoppelt werden kann, damit der Kolben unabhängig von der Vorspannung die Welle drehen kann und das Vorspannen der Feder unabhängig erfolgen kann, ob das Ventil offen oder geschlossen ist.

Gemäß einer Ausführungsform der vorliegenden Erfindung wird ein Elektrohydraulisches System für ein Ventil, das zum drehenden Antreiben eines Ventils konfiguriert ist, bereitgestellt; wobei das System eine Abtriebswelle umfasst, die mit dem Ventil direkt verbindbar ist, um das Ventil drehbar anzutreiben, und die sich entlang einer ersten Achse erstreckt; wobei das System einen hydraulischen Kolben umfasst, der konfiguriert ist, durch ein Druckmittel betätigt zu werden, und der zum Drehen der Abtriebswelle angeordnet ist, wobei der hydraulische Kolben sich entlang einer zweiten Achse erstreckt, die senkrecht zu der ersten Achse ist; wobei das System eine Vorspanneinrichtung umfasst, die konfiguriert ist, Energie durch die Vorspannung eines elastischen Elements zu speichern und dieselbe im Störfall auf die Abtriebswelle zu übertragen, sodass die Abtriebswelle in eine vorgegebene Position gedreht werden kann und diese Position abgesichert werden kann, wobei die Vorspanneinrichtung durch mindestens einen hydraulischen Zylinder vorgespannt ist und wobei das elastische Element sich entlang einer dritten Achse erstreckt; wobei der hydraulische Kolben in ein erstes und ein zweites Zylindergehäuse geführt ist, wobei mindestens ein der Zylindergehäuse mit dem hydraulischen Zylinder verbunden ist; und wobei zwischen dem einen der Zylindergehäuse und dem hydraulischen Zylinder ein Sperrventil angeordnet ist, das konfiguriert ist, die Vorspanneinrichtung von dem hydraulischen Kolben zu entkoppeln und wobei die Sperrrichtung des Sperrventils von dem hydraulischen Zylinder zu dem einen Zylindergehäuse geht. Diese Lösung ist besonders vorteilhaft, da es mit dieser Lösung tatsächlich möglich ist ein elektrohydraulisches System für ein Ventil bereitzustellen, bei dem die Vorspanneinrichtung von dem hydraulischen Kolben entkoppelt werden kann, damit der Kolben unabhängig von der Vorspannung die Welle drehen kann und das Vorspannen der Feder unabhängig erfolgen kann, ob das Ventil offen oder geschlossen ist. Diese Form der zwei Zylindergehäuse ist besonders vorteilhaft, da sie es ermöglicht, einen kompakten Zylinder zu benutzen, der mit der Antriebswelle im Eingriff steht.

Gemäß einer weiteren Ausführungsform der vorliegenden Erfindung wird ein System bereitgestellt, wobei die vorgegebene Position der Abtriebswelle eine Position ist, bei der der hydraulische Kolben sich am Anschlag eines der Zylindergehäuse befindet. Diese Lösung ist besonders vorteilhaft, weil sie ermöglicht eine stabilere Positionierung der Abtriebswelle. Die vorgegebene Position kann auch alternativ oder zusätzlich eine Position sein, an der der Kolben des hydraulischen Zylinders der Vorspanneinrichtung am Anschlag ist. Alternativ oder zusätzlich können die Anschläge vom einem an der Abtriebswelle extern angeschlossenen Ventil vorgegeben werden.

Gemäß einer weiteren Ausführungsform der vorliegenden Erfindung wird ein System bereitgestellt, wobei sowohl das erste als auch das zweite Zylindergehäuse mit dem hydraulischen Zylinder durch ein Sperrventil verbunden ist, wobei die Sperrrichtung von dem hydraulischen Zylinder zu dem ersten oder dem zweiten Zylindergehäuse geht. Diese Lösung ermöglicht eine hydraulische Verbindung sowohl zwischen dem ersten Zylindergehäuse und dem hydraulischen Zylinder als auch zwischen dem zweiten Zylindergehäuse und dem hydraulischen Zylinder. Durch diese Lösung kann die Vorspanneinrichtung vorgespannt werden, sowohl wenn das Druckmittel zu dem ersten Zylindergehäuse zugeführt wird als auch wenn das Druckmittel zu dem zweiten Zylindergehäuse zugeführt wird. Deswegen kann die Vorspannung durch verschiedene Betriebsarten erfolgen und damit das Vorspannenprozess der Vorspanneinrichtung effektiv vereinfacht wird.

Gemäß einer weiteren Ausführungsform der vorliegenden Erfindung wird ein System bereitgestellt, wobei das genannte Sperrventil ein Rückschlagventil ist und wobei das System weiterhin eine Pumpe aufweist, die mit der Ventilsitzseite des Rückschlagventils verbunden ist. Diese Lösung ermöglich mit einem einfachen Element die Vorspanneinrichtung von dem Zylindergehäuse zu entkoppeln.

Gemäß einer weiteren Ausführungsform der vorliegenden Erfindung wird ein System bereitgestellt, wobei die Vorspanneinrichtung eine Verbindungseinrichtung umfasst, die mit der Abtriebswelle gekoppelt ist, und wobei die Verbindungseinrichtung Folgendes umfasst: ein erstes Verbindungselement, das vorzugsweise mit einer Verzahnung der Abtriebswelle im Eingriff steht und bei einer Drehung der Abtriebswelle sich entlang einer vierten Achse bewegt, die parallel zu der dritten Achse ist, wobei ein zu der Abtriebswelle distales Ende des ersten Verbindungselements einen Anschlag aufweist; und ein zweites Verbindungselement das fest mit dem elastischen Element verbunden ist, wobei das zweite Verbindungselement gleitend mit dem ersten Verbindungselement gekoppelt ist, und es dazu angeordnet ist bei einer Entspannung des elastischen Elements das erste Verbindungselement an dem Anschlag mitzunehmen. Diese Lösung ist besonders vorteilhaft, da es mit dieser Lösung tatsächlich möglich ist, die Abtriebswelle im Störfall mit einem sehr einfachen, verlässlichen und kompakten System in eine vorbestimmte Position zu drehen und diese Position abzusichern.

Gemäß einer weiteren Ausführungsform der vorliegenden Erfindung wird ein System bereitgestellt, wobei die zwei Zylindergehäusen jeweils oberhalb und unterhalb der Abtriebswelle angeordnet sind, und der hydraulische Kolben einen Stangenabschnitt zwischen den beiden Zylindergehäusen umfasst, wobei der Stangenabschnitt eine Verzahnung aufweist, die mit einer Verzahnung der Abtriebswelle in Eingriff steht, wobei der Kolben durch Druckmittel, das wenigstens einem der Zylindergehäuse zugeführt wird, betätigt wird. Diese Form der zwei Zylindergehäuse ist besonders vorteilhaft, da sie es ermöglicht, einen kompakten Zylinder zu benutzen, der mit der Antriebswelle im Eingriff steht. Insbesondere enthält der Kolben sowohl die Verbindungsfunktion zwischen den zwei Zylindergehäusen und als auch die Verbindungsfunktion mit der Abtriebswelle.

Gemäß einer weiteren Ausführungsform der vorliegenden Erfindung wird ein System bereitgestellt, wobei das elastische Element mindestens ein Federsystem mit mindestens einer Feder, insbesondere eine Anordnung von mehreren parallel angeordneten Federn, umfasst, wobei die Feder bzw. die Federn parallel zur dritten Achse angeordnet sind. Diese Lösung ist besonders vorteilhaft, da es mit dieser Lösung tatsächlich möglich ist, ein bekanntes und zulässiges Element wie eine Feder, bzw. eine Anordnung von mehreren parallel angeordneten Federn, in einem neuen und kompakten System zu benutzen.

Gemäß einer weiteren Ausführungsform der vorliegenden Erfindung wird ein System bereitgestellt, wobei die zweite und die dritte Achse parallel nebeneinander sind und die erste Achse senkrecht zu der zweiten und zu der dritten Achse ist. Diese Lösung ist besonders vorteilhaft, da es mit dieser Lösung tatsächlich möglich ist ein elektrohydraulisches System für ein Ventil bereitzustellen, das kompakt ist und deswegen auf jedes drehbetätigte Ventil angewendet werden kann. Der Grund dafür ist, dass die nebeneinander angeordneten Achsen es erlauben, die Betriebspositionen der Betätigung der Abtriebswelle und der Vorspanneinrichtung entlang der Abtriebswelle zu entkoppeln. Darüber hinaus, da die Achsen parallel sind, ist es möglich ein einfaches System zu realisieren, in dem die Hauptbetätigungen nebeneinander angeordnet sind und parallel zueinander sind.

Gemäß der vorliegenden Erfindung wird ein System bereitgestellt, wobei die zweite Achse zu der dritten Achse entlang der ersten Achse der Abtriebswelle versetzt ist. Diese Lösung ist besonders vorteilhaft, da es mit dieser Lösung tatsächlich möglich ist die Länge der Abtriebswelle nützlich zu verwenden.

Gemäß einer weiteren Ausführungsform der vorliegenden Erfindung wird eine elektrohydraulische Anordnung bereitgestellt, die ein elektrohydraulisches System nach einer der davor beschriebenen Ausführungsformen und ein Gehäuse, indem das System gelagert ist, umfasst, wobei das Gehäuse eine längliche Form aufweist, die sich entlang der Abtriebswelle erstreckt, wobei ein zur Abtriebswelle senkrechter Querschnitt des Gehäuses, der proximal zu einem Endabschnitt des Gehäuses ist, der gegenüber der Vorspanneinrichtung angeordnet ist, zwei Paare von Kanten aufweist, wobei es bei jedem Paar von Kanten zwei zueinander parallele Kanten gibt. Mit einer solchen Anordnung ist es effektiv möglich ein hydraulisches System bereitzustellen, das auch unter Wasser benutzt werden kann und einfach zu einem bestehenden Ventil gekoppelt werden kann.

Gemäß einer weiteren Ausführungsform der vorliegenden Erfindung wird eine elektrohydraulische Anordnung bereitgestellt, wobei der Querschnitt mehreckig ist, vorzugsweise quadratisch. Mit einer solchen Form des Querschnitts ist die Anordnung besonders kompakt und kann Standardgröße haben.

Gemäß einer weiteren Ausführungsform der vorliegenden Erfindung wird eine elektrohydraulische Anordnung bereitgestellt, wobei ein Endabschnitt der Abtriebswelle, der gegenüber der Vorspanneinrichtung angeordnet ist, aus dem Gehäuse hervorsteht und wobei der gesagte Abschnitt mit dem Ventil reversibel verbunden und abgetrennt werden kann. Diese Lösung erlaubt eine einfache Verbindung mit einem externen Ventil.

Gemäß einer weiteren Ausführungsform der vorliegenden Erfindung wird ein Verfahren, um eine vorgegebene Drehposition eines Ventils im Störfall abzusichern, bereitgestellt, wobei das Ventil konfiguriert ist, um eine erste Drehachse herum durch die Bewegung eines Elements entlang einer zweiten Achse zu drehen, wobei, um die vorgegebene Position des Ventils im Störfall zu erreichen und zu sichern, ein elastisches Element benutzt wird, und das elastische Element entlang einer dritten Achse erstreckt wird, damit eine Position des Ventils abgesichert wird, und wobei die zweite und die dritte Achse parallel nebeneinander sind und die erste Achse senkrecht zu der zweiten und zu der dritten Achse ist. Ein solches Verfahren ist vollständig mit einem der Systeme konsistent, die in den anderen Ausführungsformen beschrieben wurden.

### KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:
Figur 1 zeigt schematisch eine Sicht eines elektrohydraulischen Systems gemäß einer Ausführungsform der vorliegenden Erfindung;
Figur 2 zeigt schematisch eine 3-D Sicht einer elektrohydraulischen Anordnung gemäß einer Ausführungsform der vorliegenden Erfindung;
Figur 3 zeigt schematisch eine Sicht des elektrohydraulischen Systems aus Figur 1 bei der Vorspannung des elastischen Elements;
Figur 4 zeigt schematisch eine Sicht des elektrohydraulischen Systems aus Figur 1 bei der Stellenfunktion der Abtriebswelle;
Figur 5 zeigt schematisch eine Sicht des elektrohydraulischen Systems aus Figur 1 bei einem Störfall.

### DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

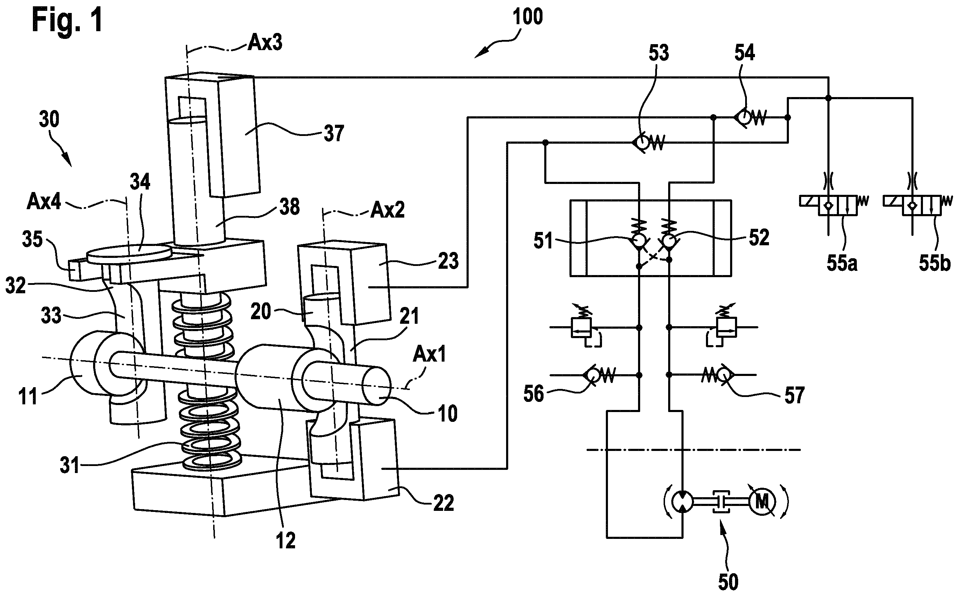

In den folgenden Paragraphen werden mit Bezug auf Figur 1 die Hauptkomponenten des elektrohydraulischen Systems erklärt. Zuerst werden die mechanischen Komponenten und danach die hydraulischen Komponenten ausführlich beschrieben.

Das elektrohydraulische System 100 umfasst eine Abtriebswelle 10, wobei der Endabschnitt der Abtriebswelle 10, die auf der rechten Seite von Figur 1 gezeigt ist, konfiguriert ist, mit einem Ventil verbunden zu werden, damit die Drehung der Abtriebswelle 10 an das Ventil übertragen werden kann.

Entlang der Achse Ax1 der Abtriebswelle 10 (von nun an einfach als "erste Achse" benannt) ist eine Verzahnung 12 vorgesehen, durch die die Abtriebswelle rotiert werden kann. Nämlich, ein hydraulischer Kolben 20, der sich entlang einer zweiten Achse Ax2 bewegt, überträgt seine axiale Bewegung zu der Antriebswelle durch eine Verzahnung, die entlang eines Stangenabschnitts des hydraulischen Kolbens angeordnet ist.

Der hydraulische Kolben ist in zwei Zylindergehäuse 22, 23 geführt, wobei ein erstes Zylindergehäuse 22 unterhalb der Abtriebswelle 10 angeordnet ist und ein zweites Zylindergehäuse 23 oberhalb der Abtriebswelle 10 angeordnet ist.

Wie im Laufe der Beschreibung genauer beschrieben wird, wird Druckmittel in eines der Zylindergehäuse 22, 23 zugeführt, damit die axiale Position des Kolbens gesteuert werden kann.

Entlang der ersten Achse ist eine Vorspanneinrichtung 30 angeordnet, die konfiguriert ist, eine Drehposition der Abtriebswelle 10 im Störfall zu erreichen und diese abzusichern.

Die Vorspanneinrichtung 30 umfasst ein elastisches Element 31, ein erstes Verbindungselement 32 und ein zweites Verbindungselement 35.

Das elastische Element 31 ist konfiguriert, Energie durch seine Vorspannung zu speichern und dieselbe im Störfall auf die Abtriebswelle 10 zu übertragen, sodass eine vorgegebene Position der Abtriebswelle 10 gesichert ist. Das elastische Element 31 erstreckt sich entlang einer dritten Achse Ax3, die parallel zu der zweiten Achse Ax2 ist. Der Abstand zwischen einer Ebene, die senkrecht zu der ersten Achse Ax1 ist und durch die zweite Achse Ax2 läuft, und einer Ebene, die senkrecht zu der ersten Achse Ax1 ist und durch die dritte Achse Ax3 läuft, der entlang einer zu der Abtriebswelle parallelen Linie gemessen wird, großer als null ist, vorzugsweise im Bereich zwischen 15 und 80mm.

Das elastische Element 31 kann vorzugsweise, wie in Figur 1 gezeigt, eine Feder sein, die konfiguriert ist, Energie entlang der dritten Achse Ax3 zu speichern und zu übertragen.

Das erste Verbindungselement 32 weist eine Verzahnung 33 auf, die mit einer Verzahnung 11 der Abtriebswelle 10 im Eingriff steht.

Insbesondere, das erste Verbindungselement 32 bewegt sich bei einer Drehung der Abtriebswelle 10 entlang einer vierten Achse Ax4, die parallel zu der dritten Achse Ax3 ist.

Angesichts der vorherigen Beschreibung, ist es klar, dass die zweite Ax2 und die dritte Ax3 Achse parallel nebeneinander sind und die erste Achse Ax1 senkrecht zu der zweiten Ax2 und zu der dritten Ax3 Achse ist.

Ein Ende des ersten Verbindungselements 32, das gegenüber der Antriebswelle angeordnet ist und das ein oberer Endabschnitt des ersten Verbindungselements 32 ist, weist einen Anschlag 34 auf. Wie aus dem weiteren Verlauf der Beschreibung klarer hervorgehen wird, ist der Anschlag relevant um die Endpositionierung der Abtriebswelle zu bestimmen.

Darüber hinaus umfasst die Vorspanneinrichtung 30 ein zweites Verbindungselement 35, das fest mit dem elastischen Element 31 verbunden ist. Das zweite Verbindungselement 35 ist gleitend mit dem ersten Verbindungselement 32 gekoppelt, und ist dazu angeordnet bei einer Entspannung des elastischen Elements 31 das erste Verbindungselement 32 an dem Anschlag 34 mitzunehmen.

Wie in Figur 1 zu sehen ist, ist das zweite Verbindungselement 35 mit einem Hydraulischen Zylinder 37 direkt verbunden, damit die Bewegung eines Kolbens des Hydraulischen Zylinders 37 an das elastische Element 31 übertragen werden kann. Daher ermöglicht der hydraulische Zylinder die Verspannung und die Entspannung des elastischen Elements mittels einer hydraulischen Steuerung, die die Zufuhr und die Abfuhr eines Druckmittels zu und aus dem hydraulischen Zylinder kontrolliert.

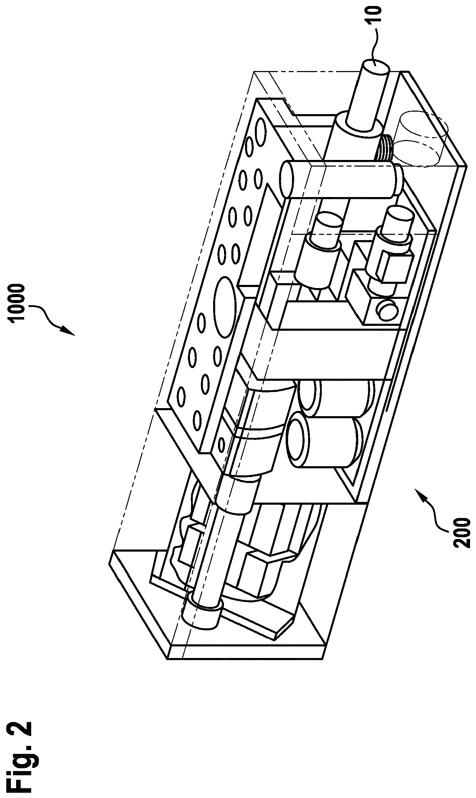

Figur 2 zeigt schematisch eine 3-D Sicht einer elektrohydraulischen Anordnung 1000. Die Anordnung umfasst das oben beschriebene elektrohydraulische System 100 und ein Gehäuse 200, indem das System 100 gelagert ist. Wie in Figur 2 zu sehen ist, weist das Gehäuse 200 eine längliche Form auf, die sich entlang der Abtriebswelle 10 erstreckt.

Das abgebildete Gehäuse 200 ist quaderförmig, und die Achse des Quaders ist parallel zu der ersten Achse der Abtriebswelle 10 angeordnet. Die Form des Gehäuses 200 ist nicht auf einen Quader beschränkt. Anders, es kann vorzugsweise jede Form haben, bei der ein zur Abtriebswelle 10 senkrechter Querschnitt des Gehäuses 200, der proximal zu einem Endabschnitt des Gehäuses 200 ist, zwei Paare von Kanten aufweist, wobei es bei jedem Paar von Kanten zwei zueinander parallele Kanten gibt.

Der Endabschnitt der Abtriebswelle 10, der auf der rechten Seite der Figur 2 ist, steht aus dem Gehäuse 200 hervor und kann mit dem Ventil reversibel verbunden und abgetrennt werden.

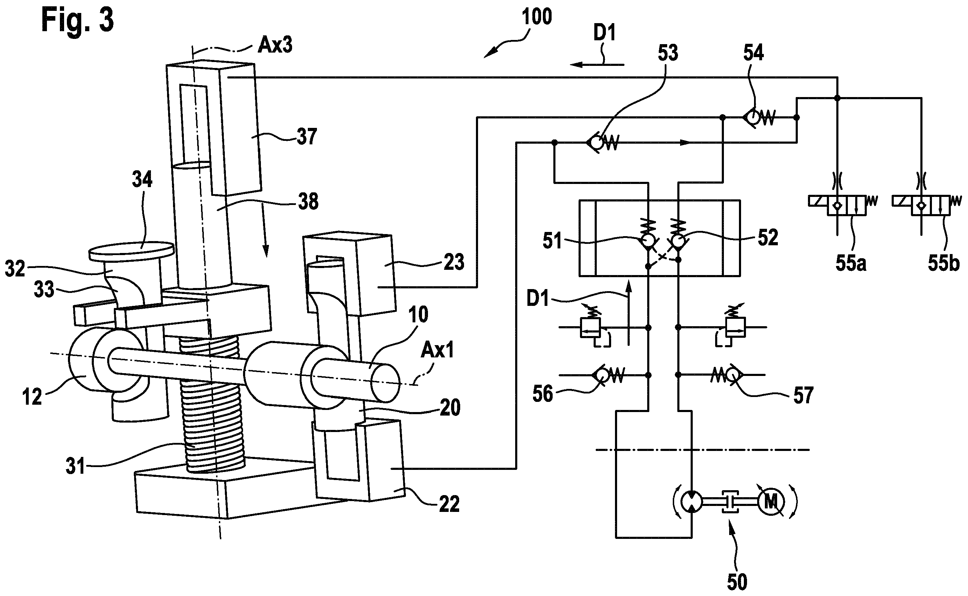

In Bezug auf die Figuren 3-5 wird jetzt das Verfahren beschrieben, das benutzt wird, um das elektrohydraulische System 100 zu steuern.

Figur 3 zeigt einen Schritt zum Vorspannen des elastischen Elements 31. In dem Startzustand befindet sich der hydraulische Kolben 20 am Anschlag in dem zweiten Zylindergehäuse 23, an einer oberen Endposition. In diesem Zustand sind die zwei Ventile 55a und 55b geschlossen. Darüber hinaus steht an dieser Startposition der Anschlag 34 des ersten Verbindungselements 32 in Eingriff mit dem zweiten Verbindungselement 35.

Die Vorspannung erfolgt durch das Pumpen eines Druckmittels (z.B. Öl) mittels einer Pumpe 50, die vorzugsweise durch einen elektrischen Motor angetrieben wird.

Das Druckmittel strömt durch ein Rückschlagventil 57, das mit einem Außenraum (z.B. mit einem Tank) verbunden ist und erreicht einen Einlass der Pumpe 50. Das Druckmittel wird dann gepumpt und strömt von dem Auslass der Pumpe 50 bis zu einem ersten Absperrventil 51 entlang der Richtung, die mit D1 gekennzeichnet ist.

Insbesondere, weil der hydraulische Kolben 20 sich an einer Schlagposition befindet, strömt das Druckmittel bis zu dem hydraulischen Zylinder 37 durch das Rückschlagventil 53 und nicht in das erste Zylindergehäuse 22.

Mit der Strömung des Druckmittels in den hydraulischen Zylinder 37, wird der Kolben 38 von dem hydraulischen Zylinder 37 nach unten entlang der dritten Achse Ax3 geschoben, damit das elastische Element 31 nach unten verspannt wird.

Da der Kolben 38 des hydraulischen Zylinders 37 fest mit dem zweiten Verbindungselement 35 verbunden ist, wird dieses gleichzeitig nach unten geschoben. Infolgedessen, wie in Figur 3 zu sehen ist, gleiten die Endabschnitte des zweiten Verbindungselements 35 über die Außenfläche des ersten Verbindungselement 32. Deswegen bleibt das erste Verbindungselement 32 fest an der gleichen Position.

Nach dem Vorspannen des elastischen Elements 31 entkoppeln die Ventile 53 und 54 den Kolben 38 von dem ersten und dem zweiten Zylindergehäuse 22, 23. Die Sperrrichtung 53 und 54 der Ventile geht von dem hydraulischen Zylinder 37 zu dem ersten und dem zweiten Zylindergehäuse 22, 23.

Durch diese Anordnung ist es möglich, die Abtriebswelle 10 über die Ventile 51 und 52 in beiden Richtungen zu drehen, ohne die Vorspannvorrichtung 30 zu beeinflussen.

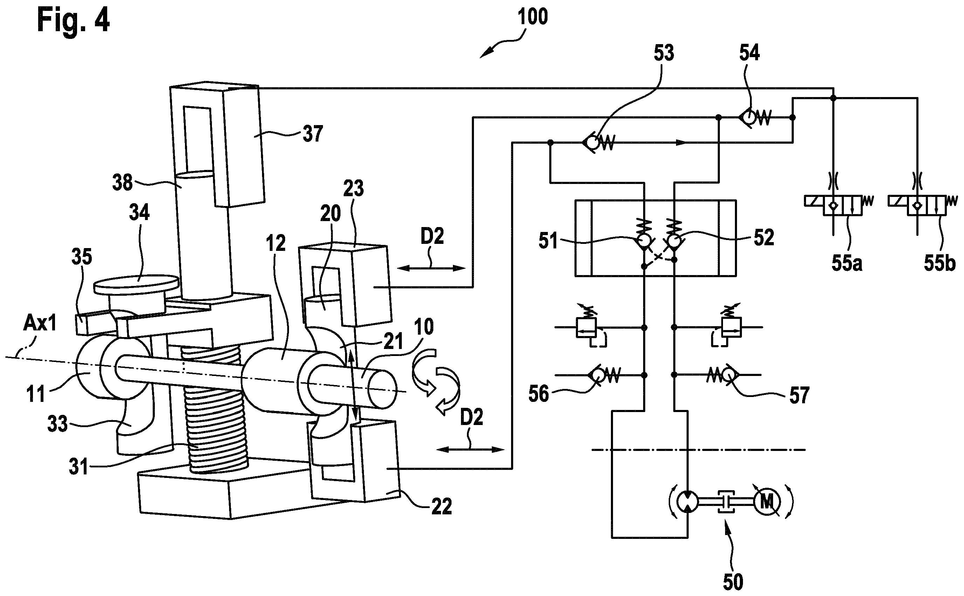

Bei dem nächsten Schritt, der in Figur 4 dargestellt ist, wird eine Drehposition der Abtriebswelle 10 durch die Pumpe 50 geregelt. Die Positionierung erfolgt durch das Pumpen des Druckmittels, das in eines der beiden Zylindergehäuse zugeführt wird (siehe Richtung D2 der gezeichneten Pfeile).

In dem Beispiel, das in Figur 4 dargestellt ist, wurde das Druckmittel in das zweite Zylindergehäuse 23 zugeführt. Der Kolben 20 wurde damit nach unten geschoben und damit die Abtriebswelle 10 durch die Verschiebung der Verzahnung 21 des Kolbens 20 im Uhrzeigersinn (in einer Sicht von rechts nach links von Figur 4) gedreht.

Aufgrund des Drehens der Verzahnung 11 der Abtriebswelle 10 verursacht das davor beschriebene Drehen der Abtriebswelle 10 eine Verschiebung des ersten Verbindungselements 32 nach unten.

Wie in Figur 4 zu sehen ist, kann die Abtriebswelle 10 mittels der Pumpe 50, die in beide Richtungen drehen kann, sowohl im Uhrzeigersinn als auch gegen den Uhrzeigersinn gedreht werden, damit ein Ventil (in den Figuren nicht gezeigt), das an einem Endabschnitt der Abtriebswelle 10 positioniert ist, in beide Richtungen gedreht werden kann.

Sollte es durch Leckage im System zum Druckabfall am Vorspannzylinder 37 kommen, kann je nach momentaner Abtriebswelle Stellung durch den Antriebsmotor 50 die Vorspannvorrichtung 37 mit Druckmittel versorgt werden ohne die aktuelle Position der Abtriebswelle zu verlassen.

Alternativ zu dem Verfahren, das gerade beschrieben wurde, kann das Vorspannen der Vorspannungseinrichtung 30 gleichzeitig mit der Drehung der Abtriebswelle 10 erfolgen.

Auch in diesem Fall befindet sich der hydraulische Kolben 20 in dem Startzustand am Anschlag in dem zweiten Zylindergehäuse 23, an einer oberen Endposition. In diesem Zustand sind die zwei Ventile 55a und 55b geschlossen. Darüber hinaus steht an dieser Startposition der Anschlag 34 des ersten Verbindungselements 32 in Eingriff mit dem zweiten Verbindungselement 35.

Die Vorspannung erfolgt durch das Pumpen des Druckmittels mittels der Pumpe 50. Das Druckmittel strömt von dem ersten Zylindergehäuse 23 und erreicht einen Einlass der Pumpe 50. Das Druckmittel wird dann gepumpt und strömt von dem Auslass der Pumpe 50 bis zu einem Absperrventil 52. Das Drückmittel strömt bis zu dem hydraulischen Zylinder 37 durch das Rückschlagventil 54 und gleichzeitig in das zweite Zylindergehäuse 22.

Mit der Strömung des Druckmittels in den hydraulischen Zylinder 37, wird der Kolben 20 von dem hydraulischen Zylinder 37 nach unten entlang der dritten Achse Ax3 geschoben, damit das elastische Element 31 nach unten verspannt wird. Mit der Strömung des Druckmittels gleichzeitig in das zweite Zylindergehäuse 22 wird gleichzeitig die Abtriebswelle 10 durch den Kolben 20 gedreht.

Deswegen erfolgt in diesem Fall das Vorspannen der Vorspannungseinrichtung 30 gleichzeitig mit der Drehung der Abtriebswelle 10.

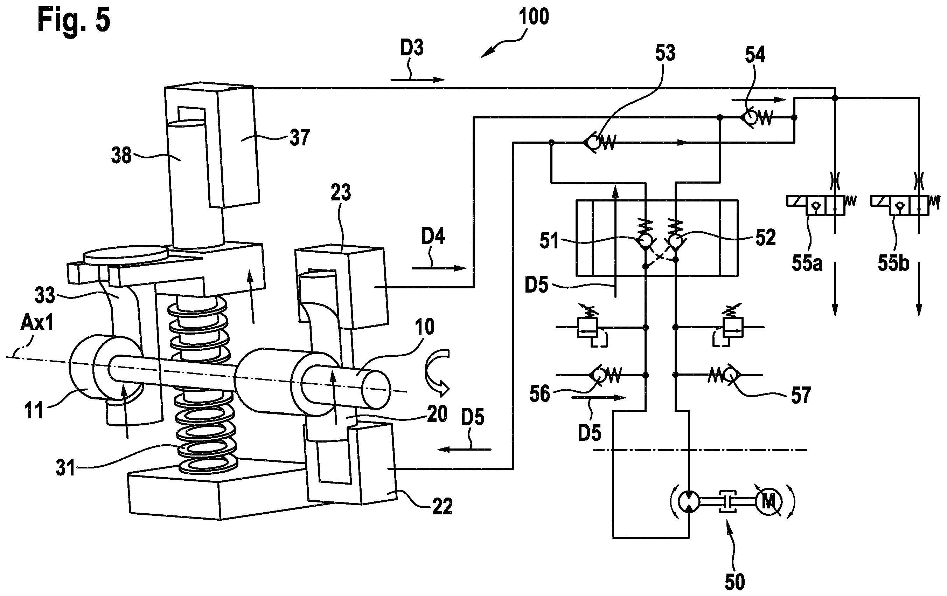

Im Fall eines Störfalls, wie in Figur 5 zu sehen ist, wird durch die Entspannung des elastischen Elements die Energie, die in dem elastischen Element gespeichert wurde, ausgelöst und diese an das erste und zweite Verbindungselement übertragen.

Insbesondere wird das zweite Verbindungselement 35 durch die Kraft des elastischen Elements 31 nach oben geschoben. Aufgrund der Interaktion zwischen dem Anschlag 34 und dem zweiten Verbindungselement 35 wird die Abtriebswelle 10 mittels der Verzahnung 11, 33 von der Abtriebswelle 10 und dem ersten Verbindungselement zu einer vorgegebenen Position gedreht.

Die vorgegebene Position kann eine Position sein, an der der Kolben 20 in dem am Anschlag in dem zweiten Zylindergehäuse 23 ist, und/oder eine Position, an der der Kolben 38 am Anschlag ist. Alternativ oder zusätzlich können die Anschläge vom einem an der Abtriebswelle 10 extern angeschlossenen Ventil vorgegeben werden.

Infolgedessen wird der Kolben mittels der Verzahnung 11, 21 von der Abtriebswelle 10 und dem Kolben 20 zu einer vorgegebenen Position gedreht, die mit der in den Figuren 1 und 3 gezeichneten Positionen übereinstimmt.

In den folgenden Paragraphen wird im Detail beschrieben, wie bei einem Störfall das elektrohydraulische System betätigt werden kann.

Erstens werden die Auslassventile 55a und 55b in eine Öffnungsposition gestellt, damit das Druckmittel, das aus dem hydraulischen Zylinder 37 entlang der Richtung D3 strömt, nach außen (z.B. zu einem Tank) gebracht werden kann.

Gleichzeitig, da die Abtriebswelle 10 gedreht wird und der Kolben 20 nach oben geschoben wird, wird das Druckmittel, das sich in dem zweiten Zylindergehäuse 23 befindet, durch das Rückschlagventil 54 und die Auslassventile 55a und 55b entlang der Richtung D4 nach außen gebracht.

Infolgedessen wird der Druck in dem ersten Zylindergehäuse 22 sinken und das Einlassventil 56 wird sich öffnen, damit Druckmittel von außen (z.B. von einem Tank) entlang der mit D5 gekennzeichneten Richtung das erste Zylindergehäuse 22 erreichen kann.

In diesem Zustand ist eine Drehposition der Abtriebswelle 10 damit gesichert.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Zum Beispiel, auch wenn in den Figuren das elastische Element nur eine elastische Feder umfasst, dass das elastische Element eine Anordnung von mehreren parallel angeordneten Federn umfassen kann. Allerdings ist es wichtig, dass die Federn parallel zur dritten Achse angeordnet sind. Das geht ohne zu sagen, dass das elastische Element ein hydraulischer Speicher sein kann, der konfiguriert ist, Energie entlang der dritten Achse Ax3 zu speichern und zu übertragen.

Darüber hinaus kann der Anfangsstatus des Kolbens 20 umgekehrt zu der Position sein, die in den Figuren 1 und 3 gekennzeichnet ist.

Darüber hinaus wurden die Bereiche, auf denen Fachleute kundig sein dürften, hier nicht beschrieben, um die beschriebene Erfindung nicht unnötig zu verschleiern.

Dementsprechend soll die Erfindung nicht durch die spezifischen veranschaulichenden Ausführungsformen beschränkt sein, sondern nur durch den Schutzbereich der beigefügten Ansprüche.

### Bezugszeichenliste

- 10:: Abtriebswelle;
- 11:: Verzahnung der Abtriebswelle;
- 12:: Verzahnung der Abtriebswelle;
- 20:: hydraulischer Kolben;
- 21:: Stangenabschnitt;
- 22:: erstes Zylindergehäuse;
- 23:: zweites Zylindergehäuse;
- 30:: Vorspanneinrichtung;
- 31:: elastisches Element;
- 32:: erstes Verbindungselement;
- 33:: Verzahnung des ersten Verbindungselements;
- 34:: Anschlag;
- 35:: zweites Verbindungselement;
- 37:: hydraulischer Zylinder;
- 38:: Kolben des hydraulischen Zylinders;
- 50:: Pumpe;
- 51, 52, 43, 54, 55a, 55b, 56, 57:: Ventile;
- Ax1:: erste Achse;
- Ax2:: zweite Achse;
- Ax3:: dritte Achse;
- Ax4:: vierte Achse;
- 100:: elektrohydraulisches System;
- 200:: Gehäuse;
- 1000:: elektrohydraulische Anordnung;

## Patentansprüche

1. Elektrohydraulisches System (100) für ein Ventil, das zum drehenden Antreiben eines Ventils konfiguriert ist, wobei das System (100) Folgendes umfasst:
eine Abtriebswelle (10), die mit dem Ventil direkt verbindbar ist, um das Ventil drehbar anzutreiben, und die sich entlang einer ersten Achse (Ax1) erstreckt;
einen hydraulischen Kolben (20), der konfiguriert ist, durch ein Druckmittel betätigt zu werden, und der zum Drehen der Abtriebswelle (10) angeordnet ist, wobei der hydraulische Kolben (20) sich entlang einer zweiten Achse (Ax2) erstreckt, die senkrecht zu der ersten Achse ist;
eine Vorspanneinrichtung (30), die konfiguriert ist, Energie durch die Vorspannung eines elastischen Elements (31) zu speichern und dieselbe im Störfall auf die Abtriebswelle zu übertragen, sodass eine vorgegebene Position der Abtriebswelle (10) gesichert werden kann, wobei die Vorspanneinrichtung (30) durch mindestens einen hydraulischen Zylinder (37) vorgespannt ist und wobei das elastische Element (31) sich entlang einer dritten Achse (Ax3) erstreckt, **wobei** der hydraulische Kolben (20) in einem ersten (22) und einem zweiten (23) Zylindergehäuse geführt ist, wobei mindestens ein der Zylindergehäuse (22, 23) mit dem hydraulischen Zylinder (37) verbunden ist; wobei zwischen dem einen der Zylindergehäuse (22, 23) und dem hydraulischen Zylinder (37) ein Sperrventil (53, 54) angeordnet ist, das konfiguriert ist, die Vorspanneinrichtung (30) von dem hydraulischen Kolben zu entkoppeln und wobei die Sperrrichtung des Sperrventils (53, 54) von dem hydraulischen Zylinder (37) zu dem einen Zylindergehäuse (22, 23) geht;
**dadurch gekennzeichnet, dass** die zweite Achse (Ax2) zu der dritten Achse (Ax3) entlang der ersten Achse (Ax1) der Abtriebswelle (10) versetzt angeordnet ist.

2. System (100) nach Anspruch 1, wobei die vorgegebene Position der Abtriebswelle (10) eine Position ist, bei der der hydraulische Kolben (20) sich am Anschlag eines der Zylindergehäuse (22, 23) befindet.

3. System (100) nach einem der Ansprüche 1 oder 2, wobei sowohl das erste (22) als auch das zweite (23) Zylindergehäuse mit dem hydraulischen Zylinder (37) durch ein Sperrventil (53, 54) verbunden ist, wobei die Sperrrichtung des Sperrventils von dem hydraulischen Zylinder (37) zu dem ersten oder dem zweiten Zylindergehäuse (22, 23) geht.

4. System nach einem der Ansprüche 1 bis 3, wobei das genannte Sperrventil (53, 54) ein Rückschlagventil ist und wobei das System weiterhin eine Pumpe (50) aufweist, die mit der Ventilsitzseite des Rückschlagventils verbunden ist.

5. System nach einem der Ansprüche 1 bis 4, wobei die Vorspanneinrichtung (30) eine Verbindungseinrichtung umfasst, die mit der Abtriebswelle (10) gekoppelt ist, wobei die Verbindungseinrichtung Folgendes umfasst:
ein erstes Verbindungselement (32), das vorzugsweise mit einer Verzahnung (11) der Abtriebswelle (10) im Eingriff steht und bei einer Drehung der Abtriebswelle (10) sich entlang einer vierten Achse (Ax4) bewegt, die parallel zu der dritten Achse (Ax3) ist, wobei ein zu der Abtriebswelle (10) distales Ende des ersten Verbindungselements (32) einen Anschlag (34) aufweist;
ein zweites Verbindungselement (35), das fest mit dem elastischen Element (31) verbunden ist, wobei das zweite Verbindungselement (35) gleitend mit dem ersten Verbindungselement (32) gekoppelt ist, und es dazu angeordnet ist bei einer Entspannung des elastischen Elements (31) das erste Verbindungselement (32) an dem Anschlag (34) mitzunehmen.

6. System (100) nach einem der Ansprüche 1 bis 3, wobei die zwei Zylindergehäusen (22, 23) jeweils oberhalb und unterhalb der Abtriebswelle (10) angeordnet sind, und der hydraulische Kolben (20) einen Stangenabschnitt (21) zwischen den beiden Zylindergehäusen (22, 23) umfasst, wobei der Stangenabschnitt (21) eine Verzahnung aufweist, die mit einer Verzahnung (12) der Abtriebswelle (10) in Eingriff steht, wobei der Kolben (20) durch Druckmittel, das wenigstens einem der Zylindergehäuse (22, 23) zugeführt wird, betätigt wird.

7. System (100) nach einem der Ansprüche 1 bis 6, wobei das elastische Element (31) mindestens ein Federsystem mit mindestens einer Feder, insbesondere eine Anordnung von mehreren parallel angeordneten Federn, umfasst, wobei die Feder bzw. die Federn parallel zur dritten Achse (Ax3) angeordnet sind.

8. System (100) nach einem der Ansprüche 1 bis 7, wobei die dritte Achse (Ax3) senkrecht zu der ersten Achse (Ax1) angeordnet ist.

9. System (100) nach einem der Ansprüche 1 bis 8, wobei die zweite (Ax2) und die dritte (Ax3) Achse parallel nebeneinander sind und die erste Achse (Ax1) senkrecht zu der zweiten (Ax2) und zu der dritten (Ax3) Achse ist.

10. Elektrohydraulische Anordnung (1000) umfassend ein elektrohydraulisches System (100) nach einem der Ansprüche 1 bis 9 und ein Gehäuse (200) indem das System (100) gelagert ist, wobei das Gehäuse (200) eine längliche Form aufweist, die sich entlang der Abtriebswelle (10) erstreckt, wobei ein zur Abtriebswelle (10) senkrechter Querschnitt des Gehäuses (200), der proximal zu einem Endabschnitt des Gehäuses (200) ist, zwei paare von Kanten aufweist, wobei es bei jedem Paar von Kanten zwei zueinander parallele Kanten gibt.

11. Anordnung (1000) nach Anspruch 10, wobei der Querabschnitt mehreckig ist, vorzugsweise quadratisch.

12. Anordnung (1000) nach einem der Ansprüche 10 oder 11, wobei ein Endabschnitt, der gegenüber der Vorspanneinrichtung angeordnet ist, der Abtriebswelle (10) aus dem Gehäuse (200) hervorsteht und wobei der gesagte Endabschnitt mit dem Ventil reversibel verbunden und abgetrennt werden kann.

## Claims

1. Electrohydraulic system (100) for a valve, which is configured to drive a valve in rotation, wherein the system (100) comprises the following:
an output shaft (10) which can be connected directly to the valve in order to drive the valve rotatably and which extends along a first axis (Ax1);
a hydraulic piston (20) which is configured to be activated by a pressure medium and which is arranged so as to rotate the output shaft (10), wherein the hydraulic piston (20) extends along a second axis (Ax2), which is perpendicular to the first axis;
a pretensioning mechanism (30) which is configured to store energy generated by pretensioning an elastic element (31) and to transmit said energy to the output shaft in the event of a fault, such that a predetermined position of the output shaft (10) can be secured, wherein the pretensioning mechanism (30) is pretensioned by at least one hydraulic cylinder (37), and wherein the elastic element (31) extends along a third axis (Ax3), wherein the hydraulic piston (20) is guided in a first cylinder housing (22) and a second cylinder housing (23), wherein at least one of the cylinder housings (22, 23) is connected to the hydraulic cylinder (37); wherein a shut-off valve (53, 54), which is configured to decouple the pretensioning mechanism (30) from the hydraulic piston, is arranged between one of the cylinder housings (22, 23) and the hydraulic cylinder (37), and wherein the shut-off direction of the shut-off valve (53, 54) is from the hydraulic cylinder (37) to one of the cylinder housings (22, 23);
**characterized in that** the second axis (Ax2) is arranged offset in relation to the third axis (Ax3) along the first axis (Ax1) of the output shaft (10).

2. System (100) according to Claim 1, wherein the predetermined position of the output shaft (10) is a position in which the hydraulic piston (20) is situated at the limit stop of one of the cylinder housings (22, 23).

3. System (100) according to either of Claims 1 and 2, wherein both the first cylinder housing (22) and the second cylinder housing (23) are connected to the hydraulic cylinder (37) by a shut-off valve (53, 54), wherein the shut-off direction of the shut-off valve is from the hydraulic cylinder (37) to the first or the second cylinder housing (22, 23).

4. System according to any one of Claims 1 to 3, wherein said shut-off valve (53, 54) is a non-return valve, and wherein the system moreover has a pump (50) which is connected to the valve seat side of the non-return valve.

5. System according to any one of Claims 1 to 4, wherein the pretensioning mechanism (30) comprises a connecting mechanism which is coupled to the output shaft (10), wherein the connecting mechanism comprises the following:
a first connecting element (32) which is preferably in engagement with teeth (11) of the output shaft (10) and, during rotation of the output shaft (10), moves along a fourth axis (Ax4) which is parallel to the third axis (Ax3), wherein an end of the first connecting element (32), remote from the output shaft (10), has a limit stop (34);
a second connecting element (35) which is fixedly connected to the elastic element (31), wherein the second connecting element (35) is coupled in sliding fashion to the first connecting element (32) and is arranged so as to carry along the first connecting element (32) on the limit stop (34) when the elastic element (31) is relaxed.

6. System (100) according to any one of Claims 1 to 3, wherein the two cylinder housings (22, 23) are arranged one above and one below the output shaft (10), and the hydraulic piston (20) comprises a rod section (21) between the two cylinder housings (22, 23), wherein the rod section (21) has teeth which are in engagement with teeth (12) of the output shaft (10), wherein the piston (20) is activated by pressure medium which is fed to at least one of the cylinder housings (22, 23).

7. System (100) according to any one of Claims 1 to 6, wherein the elastic element (31) comprises at least one spring system with at least one spring, in particular an arrangement of multiple springs arranged in parallel, wherein the spring or springs are arranged parallel to the third axis (Ax3).

8. System (100) according to any one of Claims 1 to 7, wherein the third axis (Ax3) is arranged perpendicular to the first axis (Ax1).

9. System (100) according to any one of Claims 1 to 8, wherein the second axis (Ax2) and the third axis (Ax3) are next to each other in parallel, and the first axis (Ax1) is perpendicular to the second axis (Ax2) and to the third axis (Ax3).

10. Electrohydraulic arrangement (1000) comprising an electrohydraulic system (100) according to one of Claims 1 to 9 and a housing (200) in which the system (100) is mounted, wherein the housing (200) has an elongate form which extends along the output shaft (10), wherein a cross section of the housing (200), perpendicular to the output shaft (10) and close to an end section of the housing (200), has two pairs of edges, wherein in each pair of edges there are two edges parallel to each other.

11. Arrangement (1000) according to Claim 10, wherein the cross section is polygonal, preferably square.

12. Arrangement (1000) according to either of Claims 10 and 11, wherein an end section of the output shaft (10), arranged opposite the pretensioning mechanism, projects from the housing (200), and wherein said end section can be reversibly connected to and disconnected from the valve.

## Revendications

1. Système électrohydraulique (100) pour une vanne configurée pour faire tourner une vanne, le système (100) comprenant :
un arbre de sortie (10) qui peut être relié directement à la vanne pour faire tourner la vanne et qui s'étend le long d'un premier axe (Ax1) ;
un piston hydraulique (20) configuré pour être actionné par un agent de pression et disposé pour faire tourner l'arbre de sortie (10), le piston hydraulique (20) s'étendant le long d'un deuxième axe (Ax2) perpendiculaire au premier axe ;
un dispositif de précontrainte (30) configuré pour stocker de l'énergie par la précontrainte d'un élément élastique (31) et la transférer à l'arbre de sortie en cas de défaillance, afin de garantir une position prédéfinie de l'arbre de sortie (10) ; le dispositif de précontrainte (30) étant précontraint par au moins un cylindre hydraulique (37) et l'élément élastique (31) s'étendant le long d'un troisième axe (Ax3), le piston hydraulique (20) étant placé dans un premier (22) et un deuxième (23) corps de cylindre, au moins l'un des corps de cylindre (22, 23) étant relié au cylindre hydraulique (37) ; une vanne de blocage (53, 54) étant placée entre l'un des corps de cylindre (22, 23) et le cylindre hydraulique (37) et étant configurée pour découpler le dispositif de précontrainte (30) du piston hydraulique, et le sens de verrouillage de la vanne d'arrêt (53, 54) va du cylindre hydraulique (37) à un corps de cylindre (22, 23) ;
**caractérisé en ce que** le deuxième axe (Ax2) est positionné en décalage par rapport au troisième axe (Ax3) le long du premier axe (Ax1) de l'arbre de sortie (10).

2. Système (100) selon la revendication 1, dans lequel la position prédéfinie de l'arbre de sortie (10) est une position dans laquelle le piston hydraulique (20) se trouve en butée sur l'un des corps de cylindre (22, 23).

3. Système (100) selon l'une des revendications 1 ou 2, dans lequel le premier (22) et le deuxième (23) corps de cylindre sont reliés au cylindre hydraulique (37) par une vanne de blocage (53, 54), le sens de verrouillage de la vanne d'arrêt allant du cylindre hydraulique (37) au premier ou au deuxième corps de cylindre (22, 23).

4. Système selon l'une des revendications 1 à 3, dans lequel ladite vanne d'arrêt (53, 54) est un clapet anti-retour et dans lequel le système comporte en outre une pompe (50) reliée au côté du siège de vanne du clapet anti-retour.

5. Système selon l'une des revendications 1 à 4, dans lequel le dispositif de précontrainte (30) comprend un dispositif de liaison couplé à l'arbre de sortie (10), le dispositif de liaison comprenant :
un premier élément de liaison (32), de préférence en prise avec une denture (11) de l'arbre de sortie (10) et se déplaçant le long d'un quatrième axe (Ax4) parallèle au troisième axe (Ax3), lors d'une rotation de l'arbre de sortie (10), une extrémité du premier élément de liaison (32) distale par rapport à l'arbre de sortie (10) présentant une butée (34) ;
un deuxième élément de liaison (35), solidement relié à l'élément élastique (31), le deuxième élément de liaison (35) étant couplé de manière coulissante au premier élément de liaison (32), et étant disposé de manière à emporter le premier élément de liaison (32) sur la butée (34) en cas de relâchement de l'élément élastique (31).

6. Système (100) selon l'une des revendications 1 à 3, dans lequel les deux corps de cylindre (22, 23) sont situés respectivement au-dessus et en dessous de l'arbre de sortie (10), et le piston hydraulique (20) comprend une partie de tige (21) entre les deux corps de cylindre (22, 23), ladite partie de tige (21) ayant une denture en prise avec une denture (12) de l'arbre de sortie (10), le piston (20) étant actionné par un agent de pression acheminé vers au moins l'un des corps de cylindre (22, 23).

7. Système (100) selon l'une des revendications 1 à 6, dans lequel l'élément élastique (31) comprend au moins un système de ressort doté d'au moins un ressort, en particulier un agencement de plusieurs ressorts disposés en parallèle, le ressort ou les ressorts étant disposés parallèlement au troisième axe (Ax3).

8. Système (100) selon l'une des revendications 1 à 7, dans lequel le troisième axe (Ax3) est disposé perpendiculairement au premier axe (Ax1).

9. Système (100) selon l'une des revendications 1 à 8, dans lequel le deuxième axe (Ax2) et le troisième axe (Ax3) sont parallèles et côte à côte l'un par rapport à l'autre et le premier axe (Ax1) est perpendiculaire au deuxième axe (Ax2) et au troisième axe (Ax3).

10. Agencement électrohydraulique (1000) comprenant un système électrohydraulique (100) selon l'une des revendications 1 à 9 et un corps (200) dans lequel est logé le système (100), le corps (200) ayant une forme allongée qui s'étend le long de l'arbre de sortie (10), une section transversale du corps (200) perpendiculaire à l'arbre de sortie (10), qui est en position proximale par rapport à une partie d'extrémité du corps (200), présente deux paires de bords, deux bords parallèles étant présents pour chaque paire de bords.

11. Agencement (1000) selon la revendication 10, dans lequel la section transversale étant polygonale, de préférence carrée.

12. Agencement (1000) selon l'une des revendications 10 ou 11, dans lequel une partie d'extrémité de l'arbre de sortie (10), qui est placée en face du dispositif de précontrainte, fait saillie hors du boîtier (200) et dans lequel ladite partie d'extrémité peut être reliée à la vanne et en être séparée de manière réversible.
